(19) Europäisches Patentamt / European Patent Office / Office européen des brevets

(11) **EP 2 525 523 B1**

(12) **EUROPEAN PATENT SPECIFICATION**

(45) Date of publication and mention of the grant of the patent:
**27.08.2014 Bulletin 2014/35**

(51) Int Cl.:
**H04W 16/10** (2009.01)     **H04L 5/00** (2006.01)

(21) Application number: **11163941.5**

(22) Date of filing: **27.04.2011**

(54) **Load-aware dynamic cell selection with interference coordination by fractional reuse for cellular multi-user networks**

Ladungsbewusste dynamische Zellenauswahl mit Interferenzkoordination durch die fraktionelle Wiederverwendung in zellulären Netzwerken mit mehreren Benutzern

Sélection cellulaire dynamique sensible à la charge avec coordination d'interférences par réutilisation fractionnelle pour réseaux cellulaires multi-utilisateurs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.11.2012 Bulletin 2012/47**

(73) Proprietor: **NTT DoCoMo, Inc.**
**Chiyoda-ku**
**Tokyo 100-6150 (JP)**

(72) Inventors:
 • **Dotzler, Andreas**
  **80637 München (DE)**
 • **Utschick, Wolfgang**
  **85051 Ingolstadt (DE)**
 • **Dietl, Guido, Dr.**
  **80805 München (DE)**

(74) Representative: **Zimmermann, Tankred Klaus**
**Schoppe, Zimmermann**
**Stöckeler & Zinkler & Partner**
**Patentanwälte**
**Postfach 246**
**82043 Pullach bei München (DE)**

(56) References cited:

 • CHEN S L ET AL: "Dynamic channel assignment with flexible reuse partitioning in cellular systems", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 7, 20 June 2004 (2004-06-20), pages 4275-4279, XP010712444, DOI: 10.1109/ICC.2004.1313354 ISBN: 978-0-7803-8533-7
 • ANDREAS DOTZLER ET AL: "Fractional Reuse Partitioning for MIMO Networks", GLOBECOM 2010, 2010 IEEE GLOBAL TELECOMMUNICATIONS CONFERENCE, IEEE, PISCATAWAY, NJ, USA, 6 December 2010 (2010-12-06), pages 1-5, XP031846740, ISBN: 978-1-4244-5636-9
 • MAHMUDUR RAHMAN ET AL: "Enhancing cell-edge performance: a downlink dynamic interference avoidance scheme with inter-cell coordination", IEEE TRANSACTIONS ON WIRELESS COMMUNICATIONS, IEEE SERVICE CENTER, PISCATAWAY, NJ, US, vol. 9, no. 4, 1 April 2010 (2010-04-01), pages 1414-1425, XP011306657, ISSN: 1536-1276
 • CHANG R Y ET AL: "A Graph Approach to Dynamic Fractional Frequency Reuse (FFR) in Multi-Cell OFDMA Networks", COMMUNICATIONS, 2009. ICC '09. IEEE INTERNATIONAL CONFERENCE ON, IEEE, PISCATAWAY, NJ, USA, 14 June 2009 (2009-06-14), pages 1-6, XP031505586, ISBN: 978-1-4244-3435-0

**Description**

Embodiments of the invention relate to the field of wireless cellular networks, like multi-cell MIMO communications networks (MIMO = Multiple Input Multiple Output). More specifically, embodiments of the invention relate to a method for determining for a plurality of users of a wireless cellular network those transmitters used for determining candidate rate configurations for serving the users. Further embodiments concern a wireless cellular network as well as a transmitter and a network controller for such a wireless cellular network.

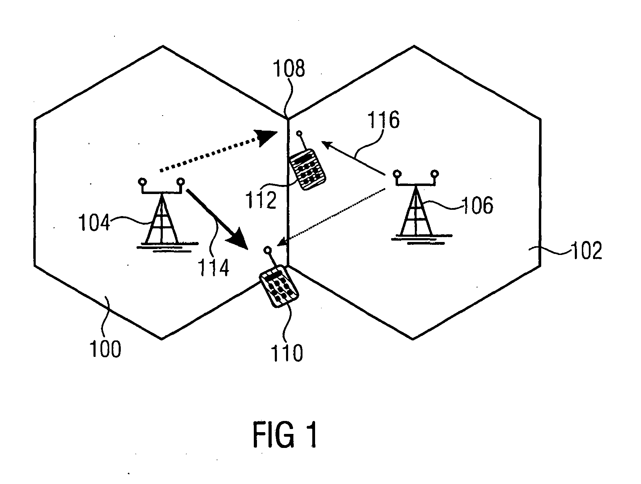

When considering efficient operation of a wireless cellular network comprising transmitters that may serve multiple users on the same resource block, for example on the same frequency, interference among users served by the same transmitter can be coordinated optimally. For example, the spatial degrees of freedom offered by multiple antenna techniques may be used to establish orthogonality so that inter-cell interference may be the main diminishing effect on the performance of the network. This is depicted schematically in Fig. 1 showing a small portion of a cellular network, more specifically two cells 100 and 102 thereof. Each cell comprises a base station 104, 106. At a cell-edge 108 two user equipments 110, 112, for example cellular telephones, are present. The user equipment 110 is served by base station 104, as is indicated by the solid arrow 114. The user equipment 112 is served by the base station 106 of the cell 102, as it is indicated by the solid arrow 116. Due to their presence at the cell-edge 108, the user equipments 110 and 112 also experiences a high inter-cell interference from the base stations of the neighboring cells, as is schematically depicted by the dotted arrows.

To efficiently manage inter-cell interference, a common approach is "fractional reuse" (FR). In accordance with this approach users at a cell-edge are served in protected resource blocks that are not available for the most dominant interferers. However, due to fading, the transmitters that cause the main interference are also potential candidates for being the serving transmitter.

A further known approach is "dynamical cell selection" (DCS) which is a technique to gain from cell selection diversity by reassigning users in a fast time scale. Additionally, DCS allows to reassign users to perform load balancing leading to more efficient resource utilization.

In the following, the downlink of a cellular network will be considered, wherein the cellular network comprises a set of transmitter arrays $\mathcal{T}$ , $T=|\mathcal{T}|$ and a set of users $\mathcal{K}$ , $K= |\mathcal{K}|$ distributed throughout the covered area. Multiple transmit arrays, typically three or six, may be mounted on the same site to form sectors, by using fixed and predefined antenna patterns. For each user $k$ a set of transmitters $\mathcal{T}_k$ is assumed from which a user may receive and decode a reference signal. For every transmitter in the set $\mathcal{T}_k$ the user calculates a scalar indicator $u_{kt}$ of the long-term average quality, for example, the "Reference Signal Received Quality" (RSRQ) in LTE. The transmitters in the set $\mathcal{T}_k$ represent suitable candidates to send data to the user $k$, but also represent the most dominant interferers. Every user is served with a certain transmission weight that is described by the rate vector $r = [r_1, ...., r_K]^1 \in \mathbb{R}_+^K$ . The user's rates $r \in \mathcal{R} \subset \mathbb{R}_+^K$ are coupled by shared resources and interference and are universally modeled by an achievable rate region $R$. A utility $U(r)$ measures the system performance by mapping the rate vector to a real number, i.e $U : \mathbb{R}_+^K \to \mathbb{R}$ . One known example for this is the network-wide proportional fairness as described in F. P. Kelly, A. K. Maulloo, and D. K. H. Tan, "Rate control for communication networks: shadow prices, proportional fairness and stability," Journal of the Operational Research Society, vol. 49, no. 3, pp. 237-252, 1998.

$$U(\boldsymbol{r}) = \sum_{k \in \mathcal{K}} \log(r_k).$$

(1.1)

An efficient operating point of the network is given by the solution of the following optimization problem:

$$\underset{r}{\text{maximize}} \quad U\left(r\right)$$

$$\text{subject to} \quad r \in \mathcal{R}.$$

$$(1.2)$$

A frequency reuse of one is desired to achieve data rates that are required in accordance with specifications of present and future networks (e.g. future networks will provide a large variety of services). However, in a network with universal reuse the cell-edge users might be excluded from a service due to the high inter-cell interference. Hybrid schemes that are a combination of universal reuse and higher reuse factors, the so-called fractional reuse, are described in S. W. Halpern, "Reuse partitioning in cellular systems," 33rd IEEE Vehicular Technology Conference, 1983, vol. 33, pp. 322 - 327, May 1983.

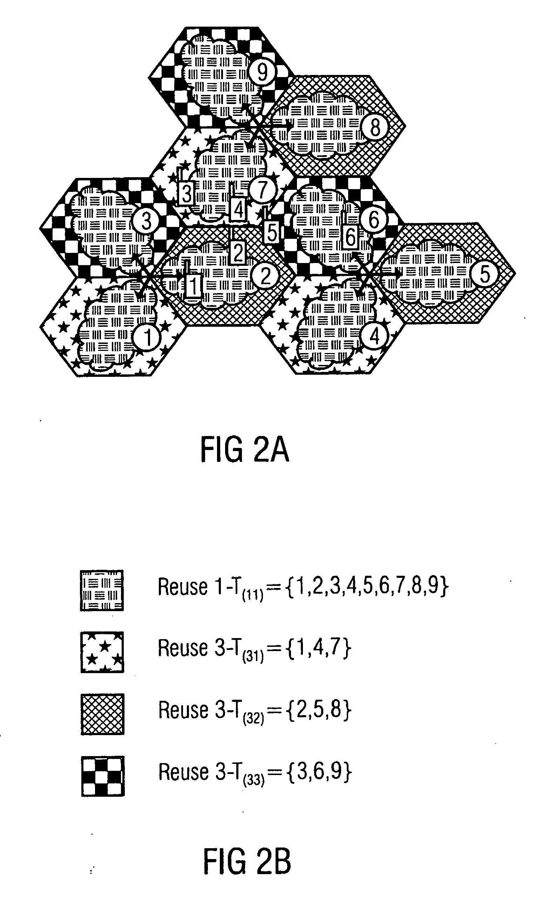

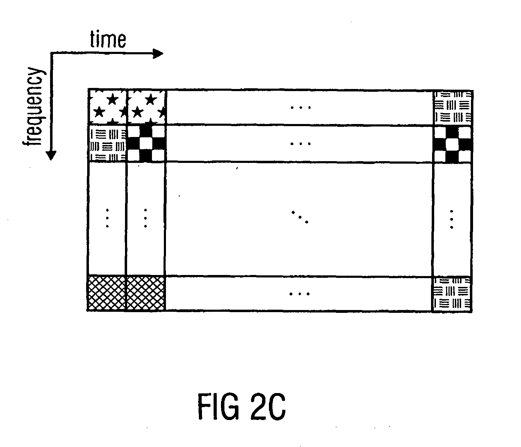

The principal underlying the fractional reuse approach will be described in the following with regard to Fig. 2 on the basis of a small three sectorized cellular network. Fig. 2(a) shows the cellular network which comprises the cells 1 to 9 each comprising a respective transmitter. In Fig. 2(b) the resource blocks, for example the frequencies, used by the respective transmitters in the cells are depicted. Each transmitter 1 to 9 operates at the cell center at the same frequency, however, at the cell edge region different resource blocks are provided, more specifically resource blocks (frequencies) different from the resource block of adjacent cells. Further, as can be seen from Fig. 2(a), it is assumed that six users (see user equipments 1 to 6) are currently in the network. Thus, the network comprises nine transmitters, i.e. $\mathcal{T} = \{1,...,9\}$, and six users, i.e. $\mathcal{K} = \{1,2,3,4,5,6\}$. A reuse of one (see Fig. 2(b)) is an uncoordinated scheme in accordance with which all transmitters $\mathcal{T}_{(11)} = \mathcal{T}$ are active on the same resource blocks. To obtain a reuse of three the transmitter sets $\mathcal{T}_{(31)} = \{1,4,7\}$, $\mathcal{T}_{(32)} = \{2,5,8\}$, and $\mathcal{T}_{(33)} = \{3,6,9\}$ are active on distinct resource blocks such that neighboring sectors are inactive or do not interfere. Fig. 2(c) depicts the use of the different resource blocks, frequencies, in the network of Fig. 2(a) over time. As can be seen the transmitter sets $\mathcal{T}_{(31)} = \{1,4,7\}$, $\mathcal{T}_{(32)} = \{2,5,8\}$, and $\mathcal{T}_{(33)} = \{3, 6, 9\}$ are active within respective time slots in such a way that neighboring sectors do not interfere.

Conventional approaches usually build on primary indicators for each resource block to announce if a transmitter will keep transmission power below a certain threshold. The indicators of the neighboring cells can be used in a scheduling algorithm. Fractional reuse may, for example, be implicitly implemented by avoiding to schedule cell-edge users or resource blocks with a high interference. Examples of dynamic coordination schemes for the fractional reuse, which are implemented by active resource control and centralized coordination, are described in M. Rahman and H. Yanikomeroglu, "Enhancing cell-edge performance: a downlink dynamic interference avoidance scheme with inter-cell coordination," IEEE Transactions on Wireless Communications, vol. 9, no. 4, pp. 1414-1425, 2010 for a single user system and in A. Dotzler, W. Utschick, and G. Dietl, "Fractional reuse partitioning for MIMO networks, in Proc. IEEE Global Telecommunications Conference (GLOBECOM 2010), Dec. 2010 for a multi-user system. This approach attempts to solve the optimization given by the equation above based on a suitable description of R.

As mentioned above, in addition to the fractional reuse approach, also the dynamic cell selection approach is known in the art. Existing networks typically use a cell (transmitter) selection scheme based on the average channel quality. An active transmitter $a_k$ of the user k may be selected as

$$a_k = \underset{t \in \mathcal{T}_k}{\text{argmax}} \, u_{kt}.$$

A cell selection that operates on a fast scale is the "fast cell site selection" (FCSS), which has been proposed for HSDPA. In FCSS users chose the best transmitter based on the instantaneous channel conditions. However, as the user, in general, is not aware of the load in the cells, load balancing requires coordination at the network side. A possible implementation is to manipulate the reference signal of overloaded cells such that users select cells with a lower load. This approach may not be suitable for future wireless networks requiring accurate cell state information. An approach using a load-aware coordinated scheduler with cell selection is described in S. Das, H. Viswanathan, and G. Rittenhouse, "Dynamic load balancing through coordinated scheduling in packet data systems," in Proc. 22nd Annual Joint Conference of the IEEE Computer and Communications Societies (INFOCOM 2003), vol. 1, Apr. 2003, pp. 786—796. In accordance with the approach interference management is implemented by a power control for CDMA. A. Sang, X. Wang, M. Madihian, and R. Gitlin, "Coordinated load balancing, handoff/cellsite selection, and scheduling in multi-cell packet data systems," Wireless Networks, vol. 14, pp. 103-120, 2008 describe a decentralized approach that, instead of directly controlling the cell selection, manipulates the schedulers in each cell such that users move to low load cells. The schedulers (and therefore the implicit cell selection scheme) are aware of the inter-cell interference, but it is not actively managed.

For future wireless systems FCSS is considered within the coordinated multi-point (CoMP) framework and is named "dynamic cell selection" (DCS). A DCS method for a single user LTE-A system is described in M. Feng, X. She, L. Chen, and Y. Kishiyama, "Enhanced dynamic cell selection with muting scheme for DL CoMP in LTE-A," in Proc. IEEE 71st Vehicular Technology Conference (VTC 2010-Spring), 2010, pp. 1-5. Interference coordination is implemented by cell muting, which may be interpreted as a specific form of FR.

The main advantages of DCS are the gains from the cell selection diversity due to the independent fading, and the ability to off-load users to neighboring cells in case a cell is congested. However, there are additional costs for coordination and user data distribution when user data needs to be communicated among the transmitters in case of a handover or needs to be made available at multiple transmitters.

In the following, the interference and load management offered by the LTE release 8 is considered. Typically, the downlink transmitter coordination is not part of a standard, only the signaling to be used for coordination schemes is specified. The LTE release 8 is described in S. Sesia, I. Toufik, and M. Baker, LTE, The UMTS Long Term Evolution: From Theory to Practice. Wiley, Apr. 2009. Inter-cell interference coordination in LTE may be static, for example, by providing a cell-planning with rare reconfigurations, or may be semi-static, typically performed on a time scale of seconds or longer. Such semi-static interference coordination is mostly performed by simple "on-off" masks with regard to the resource blocks. The standardized signaling for the downlink are *"Relative Narrowband Transmit Power"* (RNTP) indicators for each resource block to announce if the transmitter will keep transmission power below a certain threshold. The RNTP indicators of the neighboring cells can be used in the scheduling algorithm, for example, to avoid scheduling cell-edge users of resource blocks with high interference, which is a possible way to implement FR.

In LTE handovers can be initiated for several reasons, including:

- quality-based handovers: in case a neighboring transmitter offers a better channel quality than that of the current serving transmitter,

- load-based handovers: performed by the network to balance loads; in case a cell is congested, some users may be moved to neighboring transmitters.

Long term mechanisms to detect load imbalances that operate with a frequency in the order of seconds can be used to configure handover offset values between the cells. Fast cell selection is actively prevented in LTE, as user data is not available at multiple transmitters, but is moved to the new active transmitter during a handover. To enable enhanced interference management that is load-aware, additionally, a separate load indication procedure is employed to exchange load information in the order of tens of milliseconds.

The following two documents are relevant background art.

CHEN S L ET AL: "Dynamic Channel Assignment with Flexible Reuse Partitioning in Cellular Systems", 2004 IEEE INTERNATIONAL CONFERENCE ON COMMUNICATIONS; ICC 2004; 20-24 JUNE 2004, PARIS, IEEE OPERATIONS CENTER, PISCATAWAY, NJ, USA, vol.7, 20 June 2004, pages 4275-4279 describes a network-based DCA (dynamic channel assignment) scheme with flexible use of RP (reuse partitioning) technique, named as flexible dynamic reuse partitioning with interference information (FDRP-WI). Channels are open to all incoming calls and no channel pre-allocation for each region is required. As long as the channel assignment satisfies the cochannel interference constraints, any user from any region can use any channel. The scheme aims to minimize the effect of assigned channels on the availability of channels for use in the interfering cells and to reduce overall reuse distance. Both FDRP-WI with stationary users and mobile users are described.

CHANG R Y ET AL: "A Graph Approach to Dynamic Fractional Frequency Reuse (FFR) in Multi-Cell OFDMA Networks", COMMUNICATIONS, 2009. ICC '09. IEEE INTERNATIONAL CONFERENCE ON, IEEE, PISCATAWAY, NJ, USA, 14 June 2009 (2009-06-14), pages 1-6, XP031505586, ISBN: 978-1-4244-3435-0, describe a scheme for enhancing FFR by enabling adaptive spectral sharing per cell load conditions. The dynamic feature is accomplished via a graph approach in which the resource allocation problem is translated to a graph coloring problem. Specifically, in order to incorporate various versions of FFR a graph is constructed that matches the specific version of FFR and then the graph is colored using the corresponding graph algorithm.

It is an object of the present invention to provide an improved approach for the cooperation of transmitters in a wireless cellular network serving multiple users, which reduces the interference from multiple base stations trying to communicate with a served user.

This object is achieved by a method according to claim 1, a wireless cellular network according to claim 11, a transmitter for a wireless cellular network according to claim 12, and a network controller for a wireless cellular network according to claim 13.

Embodiments of the invention provide a method for determining for a plurality of users of a wireless cellular network transmitters of the wireless cellular network used for determining candidate rate configurations for serving the users, wherein the transmitters of the wireless cellular network operate in accordance with the fractional reuse scheme allocating distinct resource blocks to respective transmitter partitions, each partition including transmitters having assigned the same resource block, the method comprising, for each user, determining an active transmitter set by selecting from each transmitter partition a transmitter as an active transmitter in accordance with a predefined criterion.

In accordance with embodiments a transmitter is determined to be an active transmitter in accordance with the dynamic cell selection scheme, wherein one transmitter may be selected from each transmitter partition as an active transmitter.

In accordance with embodiments the predefined criterion comprises a parameter describing a communication between a user and a transmitter, wherein the parameter may comprise an average channel quality. A transmitter may be selected as an active transmitter in case the parameter associated with the transmitter has a maximum/minimum value when compared to all remaining transmitters in the transmitter partition.

In accordance with embodiments at least one of the active transmitter sets comprises at least two active transmitters.

In accordance with embodiments the method further comprises, for every transmitter, determining a collection of all active user sets for the transmitter, wherein an active user set comprises the users of a transmitter having assigned thereto a resource block.

In accordance with embodiments the active transmitter set is determined by the user and fed back to the transmitter, or is determined by a network controller on the basis of parameters received from the user and describing a communication between the user and the transmitters.

In accordance with embodiments the method further comprises determining candidate rate configurations by performing at each transmitter an optimization per transmitter partition the transmitter is part of; and allocating the resource blocks to the transmitters in accordance with the determined candidate rate configuration. The optimization may comprise a weighted sum rate optimization, the optimization comprising, for each transmitter, performing the weight sum rate optimization for every partition; and finding the best network wide partition which is applied at each transmitter. The method my further comprise performing a convergence check; and in case the convergence check is negative, updating the weights for the weighted sum rate optimization and repeating the previous steps.

In accordance with embodiments finding the best network wide partition is determined by a network controller, wherein the network controller receives the weighted sum rate optimization results from each transmitter, performs the convergence check, updates the weights if necessary, and communicates the final resource allocation and rate assignment to the transmitters, or by every transmitter, wherein each transmitter receives the weighted sum rate optimization results from all other transmitters, wherein messages for the convergence check, for the update of the weights if necessary, and for the final resource allocation and rate assignment are exchanged between the transmitters.

In accordance with embodiments, in case a plurality of users assigned to a specific cell are cell-edge users that comprise an active transmitter set including the transmitter of the specific cell and transmitters of different neighboring cells, the cell-edge users are moved to the neighboring cells and the transmitter of the specific cell is shut down.

Embodiments of the invention provide a computer program product comprising instructions to perform a method in accordance with embodiments of the invention when executing the instructions on a computer.

Embodiments of the invention provide a wireless cellular network comprising a plurality of transmitters operating in accordance with the fractional reuse scheme, wherein the network is configured to be operated in accordance with the method in accordance with embodiments of the invention.

Embodiments of the invention provide a transmitter for a wireless cellular network, the wireless cellular network comprising a plurality of transmitters operating in accordance with the fractional reuse scheme, wherein the transmitter is configured to perform, at least in part, the method in accordance with embodiments of the invention.

Embodiments of the invention provide a network controller for a wireless cellular network, the wireless cellular network comprising a plurality of transmitters operating in accordance with the fractional reuse scheme, wherein the network controller is configured to perform, at least in part, the method in accordance with embodiments of the invention. Embodiments of the invention provide a load-aware dynamic cell selection scheme with interference coordination by fractional reuse for a downlink transmission in a multiple-input multiple-output (MIMO) cellular network, wherein for increasing the performance of the network interference is carefully managed by fractional reuse and dynamic cell selection which helps to balance the load among the cells, so that embodiments of the invention provide a novel approach for the cooperation of transmitters, where fractional reuse and dynamic cell selection are integrated and act in concert.

The present invention is based on the finding that efficient operation of a multi-user system requires a resource assignment such that users in unfavorable positions are served on the basis of resource blocks that are not used by neighboring transmitters and, additionally, load balancing on a fast scale is to be performed jointly with interference management which allows to circumvent any asymmetric loading of the cells and avoids load congestion of the network which leads to a higher overall performance. This efficient operation of a wireless cellular network is established by sophisticated methods for FR and DCS that, in accordance with preferred embodiments, act in concert, thereby improving the network performance. In conventional approaches, FR is often implemented by user assignment, either by a central control unit or by a decentralized approach, wherein binary indicators and restriction lists are exchanged and negotiated, which are then considered in the scheduling decisions. For multi-user systems users within one cell are not effected by the same interference transmitters, therefore the indicator maps have to be merged which might block a lot of resource blocks and may lead to an inefficient usage of the resources. In general, the known attempts are not suited for multi-user systems, where transmission rates of users of the same transmitter do interdepend. Thus, in accordance with the inventive approach, a method for FR in a multi-user system as described in A. Dotzler, W. Utschick, and G. Dietl, "Fractional reuse partitioning for MIMO networks, in Proc. IEEE Global Telecommunications Conference (GLOBECOM 2010), Dec. 2010 is enriched by DCS. For single-user systems DCS may be included in the user assignment problem that is solved centrally. Alternatively, transmitters can maintain and negotiate handover thresholds for the user. In A. Sang, X. Wang, M. Madihian, and R. Gitlin, "Coordinated load balancing, handoff/cellsite selection, and scheduling in multi-cell packet data systems," Wireless Networks, vol. 14, pp. 103-120, 2008 centrally coordinated cell breathing leads to handovers of the users and to less congested cells, without explicit manipulation of the handover parameters. Thus, the above-mentioned most interesting approaches known in the art are not applicable for multi-user systems, so that for multi-user systems a load-aware DCS scheme that integrates with FR is missing.

Thus, in accordance with a first aspect embodiments of the invention provide a novel way for selecting transmitters in a wireless cellular network that are used for determining candidate rate configuration for serving users. The inventive approach combines the advantageous effects of fractional reuse and dynamic cell selection in such a way that for each user not only a single active transmitter is determined, rather when starting from the fractional reuse scheme, all possible active transmitters are determined as an "active transmitter set".

In accordance with a further aspect, which results from the first aspect, there is no explicit cell selection mechanism needed. Rather, in accordance with the second aspect - on the basis of the determined active transmitter set for a user - the candidate configurations are determined, e.g. by applying a WSR optimization (WSR = weighted sum rate), and the resources and rates are allocated so that the cell selection is performed inherently by the resource and rate assignment.

A further aspect of the inventive approach concerns the specifics of the signaling during the optimization and allocation process in accordance with the second aspect.

Yet a further aspect concerns the possibility of muting a transmitter for avoiding excessive interference which, at the same time, allows for energy savings. This is possible because of the approach in accordance with the first aspect determining a plurality of active transmitters for the users and providing for the possibility of muting one of the transmitters in case users within an assigned cell may be served by transmitters of neighboring cells so that the transmitter of the cell to which the users are assigned is no longer needed and may be shut off.

Embodiments of the invention will now be described with reference to the accompanying drawings, in which:

Fig. 1 shows a small portion of a cellular network,

Fig. 2 shows a small three sectorized cellular network, wherein Fig. 2(a) shows the cellular network, wherein Fig. 2(b) shows the resource blocks used by the respective transmitters in the cells, and wherein Fig. 2(c) depicts the use of the different resource blocks, e.g. frequencies, in the network of Fig. 2(a) over time,

Fig. 3 shows the final algorithm for solving equation (1.2),

Fig. 4 is a message sequence chart for the signaling associated with a direct feedback of active sets,

Fig. 5 is a message sequence chart for a central computation of active sets,

Fig. 6 shows for the network of Fig. 2(a) the available resources for the users when only using the conventional fractional reuse scheme,

Fig. 7 shows the available resources for the users when applying the inventive approach combining fractional reuse and dynamic cell selection,

Fig.8 shows a table showing the set of active users determined in accordance with the inventive approach,

Fig. 9     shows a table indicating the available users to the transmitters,

Fig. 10     shows the algorithm of Fig. 3 in more detail,

Fig. 11     shows a fast reselection of transmitters for a user in the exemplary network shown in Fig. 2(a),

Fig. 12     shows a sequence diagram for the centralized dynamic cell selection in accordance with embodiments of the invention,

Fig. 13     shows a sequence diagram of the decentralized approach for the dynamic cell selection,

Fig. 14     is a table showing simulation parameters,

Fig. 15     shows a graph of the network performance measured by the proportional fairness utility, and

Fig. 16     shows a graph of user spectral efficiency.

Embodiments of the invention provide a novel transmitter coordination method for the downlink of a cellular network which is an integrated approach for FR (fractional reuse) and load-aware DCS (dynamic cell selection). A mechanism to implement FR is, for example, described in A. Dotzler, W. Utschick, and G. Dietl, "Fractional reuse partitioning for MIMO networks, in Proc. IEEE Global Telecommunications Conference (GLOBECOM 2010), Dec. 2010, which introduces a method with predefined partitions of the transmitters such that fractional FR can be established. All feasible resource allocations to the transmitter partitions and rate assignments among the multiple users served by the transmitters constitute an achievable rate region $R$ and, in accordance with the inventive approach, an iterative algorithm is used to solve the optimization given above in Equation (1.2). The algorithm calculates a set of candidate configurations until a solution can be found as a convex combination of these points. The solution is established by a resource allocation such that each candidate configuration is applied to a fraction of the resources related to the coefficients of a convex combination. The candidate configurations are found by a sequence of weighted-sum rate (WSR) optimizations, where the weights are updated dependent on the utility.

To enable DCS, contrary to prior art approaches, a set of active transmitters per user is used (instead of a single active transmitter), and a mechanism is applied to select this set based on the transmitter partitions defined for FR. According to a suitable criterion, for example, the average channel quality, maximum one transmitter out of each transmitter partition is selected as a potential active transmitter. As is described in A. Sang, X. Wang, M. Madihian, and R. Gitlin, "Coordinated load balancing, handoff/cellsite selection, and scheduling in multi-cell packet data systems," Wireless Networks, vol. 14, pp. 103-120, 2008 no explicit selection rule is given, instead the cell (transmitter) selection is a direct consequence of the structure of the candidate configurations and the following resource allocation.

In a similar way as described in A. Dotzler, W. Utschick, and G. Dietl, "Fractional reuse partitioning for MIMO networks, in Proc. IEEE Global Telecommunications Conference (GLOBECOM 2010), Dec. 2010, candidate configurations are found by WSR optimization and a competition among all transmitter partitions. However, in addition to prior art approaches in accordance with embodiments of the invention, an approach is provided where every transmitter performs a WSR per transmitter partition it is part of and in accordance with a further aspect, the signaling to compute the candidate point is also described. A WSR maximization automatically performs a user selection and allows to drop users in case they have too bad channel conditions and in case the transmitter is overloaded. This assures that a reselection only happens in case the channel conditions to the other transmitter are good enough (in relation to the channel conditions of the other users) and the transmitter has available resources to serve the user.

As users are allowed to have different active transmitters for each transmitter partition and as the solution is found by a combination of the configurations, reselection is possible. However, the mechanism to construct the active transmitter set and the resource allocation assures that within a resource block, for example, a time slot, a user is only served by a single transmitter. The active transmitter set for DCS is chosen such that it integrates with FR. Since an explicit selection rule is not necessary, there is no need to negotiate and maintain handover thresholds for the users. Instead, the transmission strategies are computed by WSR optimizations (multi-user scheduling) at the transmitters and only a minor overhead is caused to coordinate resource allocation and weight updates between the transmitters. Additionally, in accordance with embodiments, the DCS approach is tied to the interference management so that more flexibility for the downlink coordination is provided. For example, cell-edge users may be moved to neighboring cells and the transmitter can be temporarily shut off in order not to interfere with these users.

Thus, the main contributions of embodiments of the invention are:

-     an approach for selecting an active transmitter set for each user,

- an approach for calculating candidate configurations by performing weighted sum-rate optimizations at each transmitter,
- signaling methods to coordinate resource allocation and weight updates,
- muting of transmitters to avoid excessive interference for enabling energy savings.

In the following, the definition of the fractional reuse will be explained (see also A. Dotzler, W. Utschick, and G. Dietl, "Fractional reuse partitioning for MIMO networks, in Proc. IEEE Global Telecommunications Conference (GLOBECOM 2010), Dec. 2010). A set of reuse factors N = $|\mathcal{N}|$ is considered to be available and a reuse pattern is defined as follows:

**Definition 1:** A reuse pattern with a factor $n \in \mathcal{N}$ is given by a partition of transmitters $\mathcal{T}$ into subsets total $\mathcal{T}_{(n1)} \ldots \mathcal{T}_{(nn)}$. Orthogonal resources are assigned to each subset given by the fractions $f_{(n1)}, \ldots, f_{(nn)}$, such that $\sum_{i=1}^{n} f_{(ni)} = f_n$, ' where $f_n$ is the fraction of the total resources assigned to factor $n$.

Typically, patterns are designed such that transmitters within the subset $\mathcal{T}_{(ni)}$ are geographically separated and therefore interference is reduced by the attenuation, due to the pathlosses. The interdependence of the user rates within one reuse pattern is described by an achievable rate region $R_{(ni)}$. The dynamic allocation of resources to reuse patterns is known as fractional reuse which is formally defined as follows:

**Definition 2:** The dynamic assignment of $f = \bigtimes_{n \in \mathcal{N}} \bigtimes_{i=1,\ldots,n} \{f_{(ni)}\}$, such that $f = \sum_{n \in \mathcal{N}} \sum_{i=1}^{n} f_{(ni)} = 1$, , respectively $f \in \mathcal{F}, \mathcal{F} = \{f \geq 0 : \|f\|_1 = 1\}$, is called fractional reuse.

An operation point of a network,

$$r = f_{(11)}c_{(11)} + \ldots + f_{(NN)}c_{(NN)} = [c_{(11)}, \ldots, c_{(NN)}]\, f,$$

$$(1.3)$$

is determined by the resource allocation $f \in \mathcal{F}$ and the rate assignment $c_{(11)} \in R_{(11)}, \ldots, c_{(NN)} \in R_{(NN)}$. Based on these definitions, an efficient operating point of the network can be found as the solution of the following optimization problem:

$$\operatorname*{maximize}_{r, f \in \mathcal{F}} \; U(r)$$

$$\text{subject to} \quad r = \sum_{n \in \mathcal{N}} \sum_{i=1}^{n} f_{(ni)} c_{(ni)}$$

$$c_{(ni)} \in \mathcal{R}_{(ni)}, \; \forall n \in \mathcal{N}, i = 1, \ldots, n.$$

Equation (1.3) implies an achievable rate region $R$, achieved by scheduling multiple physical layer modes

$$\mathcal{R} = \left\{ [c_{(11)}, \ldots, c_{(NN)}]\, f : c_{(11)} \in \mathcal{R}_{(11)}, \ldots, c_{(NN)} \in \mathcal{R}_{(NN)}, f \in \mathcal{F} \right\} = \operatorname{co}\{\mathcal{R}_{(11)}, \ldots, \mathcal{R}_{(NN)}\}$$

which leads to a formulation that is of the same structure as Equation (1.2):

$$\text{maximize}_{r} \quad U(r)$$

$$\text{subject to} \quad r \in \mathcal{R} = \text{co}\{\mathcal{R}_{(11)}, \ldots, \mathcal{R}_{(NN)}\}.$$

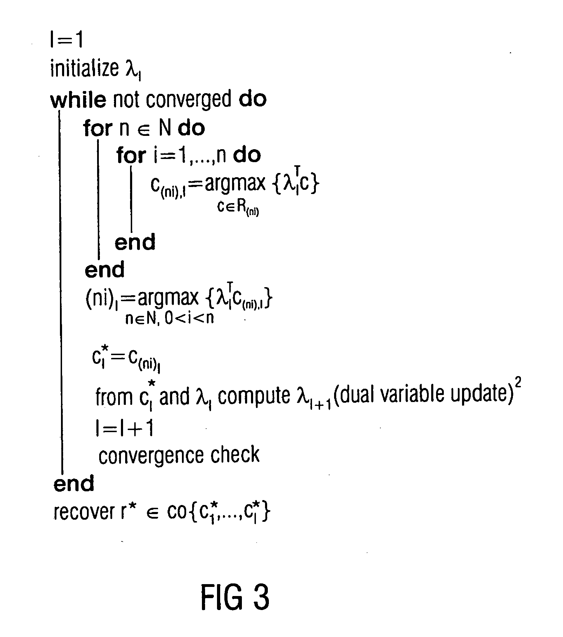

Under the assumption that $R$ is convex, which is true by definition in the applied model, and the utility is jointly concave in all user rates, Algorithm 1 depicted in Fig. 3 can be employed to solve the problem, as this is also described in A. Dotzler, W. Utschick, and G. Dietl, "Fractional reuse partitioning for MIMO networks, in Proc. IEEE Global Telecommunications Conference (GLOBECOM 2010), Dec. 2010.

Following the above short explanation of the fractional reuse definition as it can also be derived from A. Dotzler, W. Utschick, and G. Dietl, "Fractional reuse partitioning for MIMO networks, in Proc. IEEE Global Telecommunications Conference (GLOBECOM 2010), Dec. 2010, a first aspect in accordance with embodiments of the invention is described. Contrary to state-of-the-art methods, in accordance with embodiments of the invention, there is no explicit cell (transmitter) selection mechanism. Instead, the selection is performed inherently by the resource allocation and rate assignment. Users that may benefit from a dynamic selection are those on the cell edge or boundary and therefore also the ones with significant interference from neighboring transmitters, which are in turn the transmitters that are candidates for transmission. In case a resource block is assigned to the transmitters in the subset $\mathcal{T}_{(ni)}$ , the transmitter a user can potentially receive data from is called an "active transmitter", and is determined by:

$$a_{(ni),k} = \operatorname*{argmax}_{t \in \mathcal{T}_{(ni)} \cap \mathcal{T}_k} u_{kt},$$

and a set of active transmitters for a user k is

$$\mathcal{A}_k = \{a_{(11),k}, \ldots, a_{(NN),k}\}.$$

The assignment of the transmitter $a_{(ni),k}$ is a consequence of the resource allocation to the candidate configurations $c_{(ni)}$, found by a weighted sum-rate optimization, where $c_{(ni),k} > 0$. From a network's perspective, the set of candidate users of a transmitter $t$ in case the resource block is assigned to pattern $(ni)$ is

$$\mathcal{K}_{(ni),t} = \{k \in \mathcal{K} : a_{(ni),k} = t\}.$$

The collection of all active user sets for a transmitter $t$ is

$$\mathcal{L}_t = \{\mathcal{K}_{(11),t}, \ldots, \mathcal{K}_{(Ni'),t}\},$$

where $i'$ is such that $t \in \mathcal{T}_{(Ni')}$ .

In case the transmitter partitions $\mathcal{T}_{(11)}$ ,....., $\mathcal{T}_{(NN)}$ are known to a user, $A_k$ can be determined by the user and fed back to the transmitters. The feedback can be implemented either by sending one message that is then distributed among the transmitters in $A_k$ or by a message that is sent to every user, wherein $A_k$ indicates the user's membership in $\mathcal{K}_{(ni),t}$.

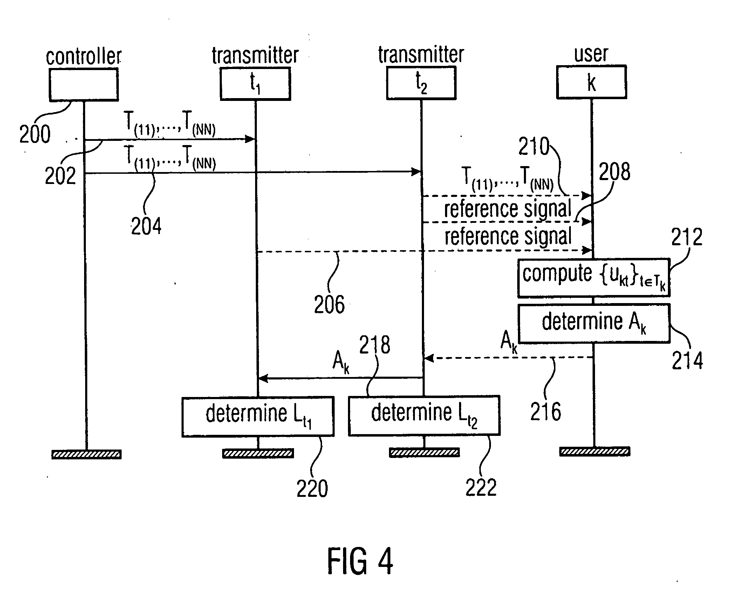

Fig. 4 shows a message sequence chart for the signaling associated with a direct feedback of active sets. As can be seen from Fig. 4, a network controller 200, a first transmitter $t_1$, a second transmitter $t_2$ and a user k are schematically shown. The controller 200 provides information about the transmitter partitions $\mathcal{T}_{(11)},....,\mathcal{T}_{(NN)}$ to all transmitters controlled by it (in the example of Fig. 4 two transmitters $t_1$ and $t_2$) by messages 202 and 204. Via messages 206 and 208 the user k receives from transmitters $t_1$ and $t_2$ (which are part of the plurality of transmitters in the network) a reference signal. In addition, a message 210 indicating the transmitter partitions is received at the user $k$. On the basis of the information received, the user computes the scalar indicator $u_{kt}$ of the long-term average quality, for example the reference signal received quality (RSRQ), for each transmitter $t$ being part of the transmitter partitions $\mathcal{T}_k$ for user $k$ (see block 212). On the basis of the results of the calculation in block 212, the set $A_k$ of active transmitters for the user k is calculated in block 214. The set of active transmitters $A_k$ is transmitted from the user k by message 216 to transmitter $t_2$ which, in turn, transmits the set $A_k$ via message 218 to the first transmitter $t_1$. As it is shown in blocks 220 and 222 at each transmitter $t_1$ and $t_2$ the collection of all active user sets for the respective transmitter, namely user sets $\mathcal{L}_{t1}$ and $\mathcal{L}_{t2}$ are calculated.

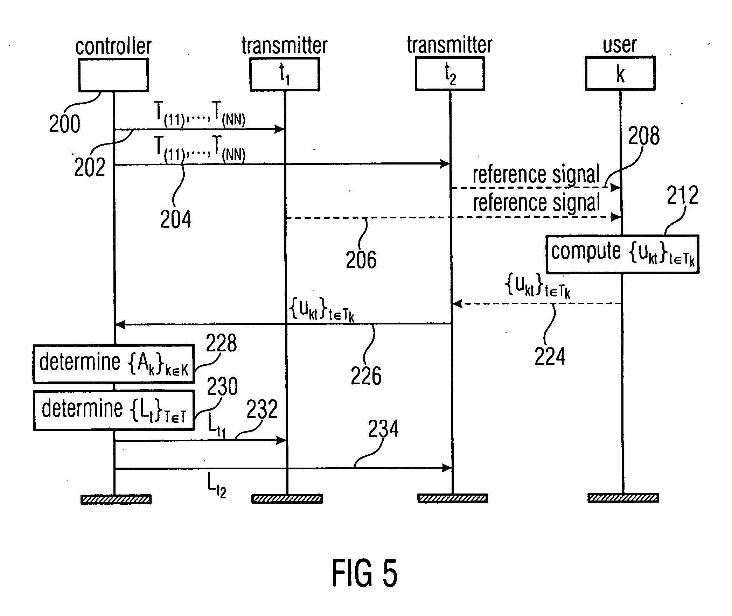

The active transmitter set for a user and the associated collection of all active user sets for a transmitter may also be calculated in a centralized manner, for example by the central controller. This is shown in Fig. 5 being a message sequence chart for a central computation of active sets. In a similar way as in Fig. 4, the controller 200 forwards via messages 202 and 204 the transmitter partitions to the transmitters $t_1$ and $t_2$, respectively. Via messages 208 and 210 the transmitters $t_1$ and $t_2$, respectively, transmit a reference signal to the user $k$ which, at block 212 calculates $u_{kt}$ as described above. The indicator $u_{kt}$ is transmitted via messages 224 and 226 via the transmitter $t_2$ to the network controller 200. The network controller 200, at block 228, determines for each user the active set $\mathcal{A}_k$ and determines for each transmitter that is part of a partition $\mathcal{T}$ the collection of all active user sets for the respective transmitter as is shown in block 230. The collection of all active user sets for transmitter $t_1$ and for transmitter $t_2$ are transmitted from the controller 200 to the respective transmitters $t_1$ and $t_2$ using messages 232 and 234.

Thus, in accordance with the first aspect of embodiments of the invention, all transmitters that fulfill a predefined criterion, for example an average channel quality, are selected to define the active transmitter set, which will now be described in further detail, on the basis of the network illustrated in Fig. 2(a). The network shown in Fig. 2(a) comprises nine transmitters, i.e. $\mathcal{T}$ = {1,....,9}. Further, six users are provided, i.e. $\kappa$ = {1,2,3,4,5,6}. In a typical cell selection scheme, each user, $k \in \kappa$ is assigned to a sole active transmitter $a_k \in \mathcal{T}$. In the example shown in Fig. 2(a) this means that the active transmitter for user 1 is transmitter no. 2, the active transmitter for user 3 is transmitter no. 7, the active transmitter for user 4 is transmitter no. 7, the active transmitter for user 5 is transmitter no. 6, and the active transmitter for user 6 is transmitter no. 6, with other words:

$$a_1=2,\ a_2=2,\ a_3=7,\ a_4=7,\ a_5=6,\ a_6=6.$$

The fractional reuse is established by allocating fractions of the resources $f_{(11)}$, $f_{(31)}$, $f_{(32)}$, $f_{(33)}$ to the transmitter sets $\mathcal{T}_{(11)}$ = {1,...,9}, $\mathcal{T}_{(31)}$ = {1,4,7}, $\mathcal{T}_{(32)}$ = {2,5,8}, and $\mathcal{T}_{(33)}$ = {3,6,9}. According to Equation (1.3) the operating point of such a network is given by:

$$r = f_{(11)}\boldsymbol{c}_{(11)} + f_{(31)}\boldsymbol{c}_{(31)} + f_{(32)}\boldsymbol{c}_{(32)} + f_{(33)}\boldsymbol{c}_{(33)}$$

$$= f_{(11)}\begin{pmatrix} c_{(11),1} \\ c_{(11),2} \\ c_{(11),3} \\ c_{(11),4} \\ c_{(11),5} \\ c_{(11),6} \end{pmatrix} + f_{(31)}\begin{pmatrix} 0 \\ 0 \\ c_{(31),3} \\ c_{(31),4} \\ 0 \\ 0 \end{pmatrix} + f_{(32)}\begin{pmatrix} c_{(32),1} \\ c_{(32),2} \\ 0 \\ 0 \\ 0 \\ 0 \end{pmatrix} + f_{(33)}\begin{pmatrix} 0 \\ 0 \\ 0 \\ 0 \\ c_{(33),5} \\ c_{(33),6} \end{pmatrix}$$

where

$$f_{(11)} + f_{(31)} + f_{(32)} + f_{(33)} \leq 1$$

and

$$c_{(11)} \in \mathcal{R}_{(11)}, c_{(31)} \in \mathcal{R}_{(31)}, c_{(32)} \in \mathcal{R}_{(32)}, c_{(33)} \in \mathcal{R}_{(33)}.$$

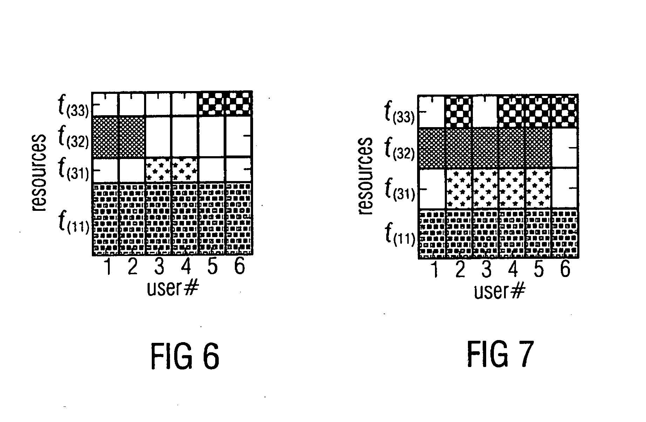

Fig. 6 shows, for the example network in Fig. 2(a), the available resources for the users when only using the conventional fractional reuse scheme. Fig. 6 illustrates the example from the user perspective, and it can be seen that on certain fractions of the resources, $f_{(31)}$, $f_{(32)}$, and $f_{(33)}$, only some transmitters are active and, therefore, inter-cell interference is reduced. For example, on fraction $f_{(31)}$ of the resource blocks that are exclusively assigned to the transmitter partition $\mathcal{T}_{(31)}$ comprising transmitters 1, 4, 7 ( $\mathcal{T}_{(31)} = \{1, 4, 7\}$ ) only users 3 and 4 can be active and are served free of inter-cell interference. However, the rates of the users 3 and 4 interdepend and are determined by the transmission strategy $\boldsymbol{c}_{(31),7}$ chosen by transmitter no. 7. In case all available resources are assigned to transmitter set $\mathcal{T}_{(31)}$ , the achievable rates are described by the rate region $R_{(31)}$.

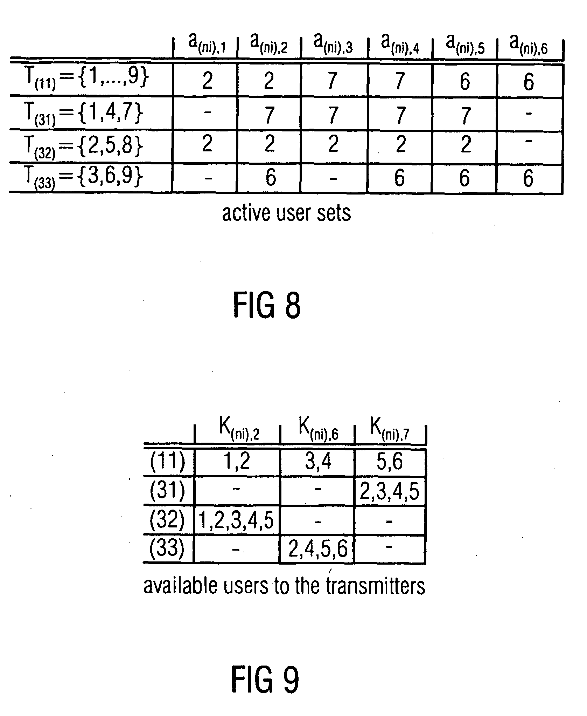

The above-described example is now extended to illustrate the inventive approach in accordance with the first aspect. Fig. 7 shows the available resources for the users when applying the inventive approach of combining fractional reuse with dynamic cell selection. First, the set of active users is determined in accordance with the description given above, and the result is summarized in the table shown in Fig. 8. Then, the user sets available to the transmitters are determined, also on the basis of the above approach, and the results are given in the table shown in Fig. 9, indicating the available users to the transmitters.

On the basis of this information, an operating point of the network is given by:

$$r = f_{(11)}\mathbf{c}_{(11)} + f_{(31)}\mathbf{c}_{(31)} + f_{(32)}\mathbf{c}_{(32)} + f_{(33)}\mathbf{c}_{(33)}$$

$$= f_{(11)}\begin{pmatrix} c_{(11),1} \\ c_{(11),2} \\ c_{(11),3} \\ c_{(11),4} \\ c_{(11),5} \\ c_{(11),6} \end{pmatrix} + f_{(31)}\begin{pmatrix} 0 \\ c_{(31),2} \\ c_{(31),3} \\ c_{(31),4} \\ c_{(31),5} \\ 0 \end{pmatrix} + f_{(32)}\begin{pmatrix} c_{(32),1} \\ c_{(32),2} \\ c_{(32),3} \\ c_{(32),4} \\ c_{(32),5} \\ 0 \end{pmatrix} + f_{(33)}\begin{pmatrix} 0 \\ c_{(33),2} \\ 0 \\ c_{(33),4} \\ c_{(33),5} \\ c_{(33),6} \end{pmatrix}$$

Fig. 7 shows the resources available for the users in case FR and DCS is used. As can be seen, except for users 1 and 6 all other users, namely users 2, 3, 4 and 5, have associated therewith at least two transmitters. For example, user 2 has associated therewith three different transmitters, namely transmitters 2, 6 and 7. Also users 4 and 5 have associated therewith transmitters 2, 6 and 7. User 3 has associated therewith transmitters 2 and 6. Thus, a user $k$ now is aware of a set of active transmitters $A_k$.

In the following, the second aspect of the inventive approach will be described, namely the estimation of instantaneous channels. More specifically, after a user $k$ knows the set of active transmitters $A_k$ an estimation of the instantaneous channels, for example the channel matrix in MIMO systems, between the user $k$ and the transmitters $A_k$ is performed. It is assumed that within each pattern, interference of other transmitters is approximated such that it only depends on the set of active transmitters $\mathcal{T}_{(ni)} \setminus a_{(ni),k}$, but not on their transmission strategy, for example, the transmission power or transmit signal covariance matrix in MIMO systems. The interdependence of data rates achieved by the users $\kappa_{(ni),t}$ assigned to a transmitter t in case a pattern $(ni)$ is active, is modeled by the rate region $R_{(ni),t}$. The set of users that cannot be served in case the pattern $(ni)$ is active, is given by:

$$\bar{\mathcal{K}}_{(ni)} = \{ k \in \mathcal{K} : \mathcal{T}_k \cap \mathcal{T}_{(ni)} = \varnothing \} = \mathcal{K} \setminus \bigcup_{t \in \mathcal{T}_{(ni)}} \mathcal{K}_{(ni),t},$$

The rate region $R_{(ni)}$ can be obtained from:

$$\hat{\mathcal{R}}_{(ni)} = \left( \underset{t \in \mathcal{T}_{(ni)}}{\times} \mathcal{R}_{(ni),t} \right) \times \left( \underset{k \in \bar{\mathcal{K}}_{(ni)}}{\times} \{0\} \right)$$

by permutation of the users. The weighted sum-rate optimization

$$\underset{n \in \mathcal{N}, 1 \leq i \leq n}{\text{maximize}} \left( \underset{\mathbf{c}}{\text{maximize}} \ \lambda^{\mathsf{T}} \mathbf{c} \ \text{subject to} \ \mathbf{c} \in \mathcal{R}_{(ni)} \right)$$

can be performed in three steps:

(1) for each transmitter $t \in \mathcal{T}$, a weighted sum-rate optimization is performed for every pattern $(ni)$, where $t \in \mathcal{T}_{(ni)}$. The rate vector $\mathbf{c}_{(ni),t}$ is a solution of

$$\underset{c}{\text{maximize}} \quad \sum_{k \in \mathcal{K}_{(ni),t}} \lambda_k c_k \text{ subject to } c \in \mathcal{R}_{(ni),t}.$$

$$(1.4)$$

(2) find the best network-wide pattern as a solution of

$$\underset{n \in \mathcal{N}, 1 \leq i \leq n}{\text{maximize}} \sum_{t \in \mathcal{T}_{(ni)}} \sum_{k \in \mathcal{K}_{(ni),t}} \lambda_k c_k$$

$$(1.5)$$

(3) the solution to the network-wide weighted sum-rate optimization c* is given by

$$c_k^* = \begin{cases} c_{(ni),t,k} & \text{if } k \in \bigcup_{t \in \mathcal{T}_{(ni)}} \mathcal{K}_{(ni),t} \\ 0 & \text{otherwise} \end{cases}$$

$$(1.6)$$

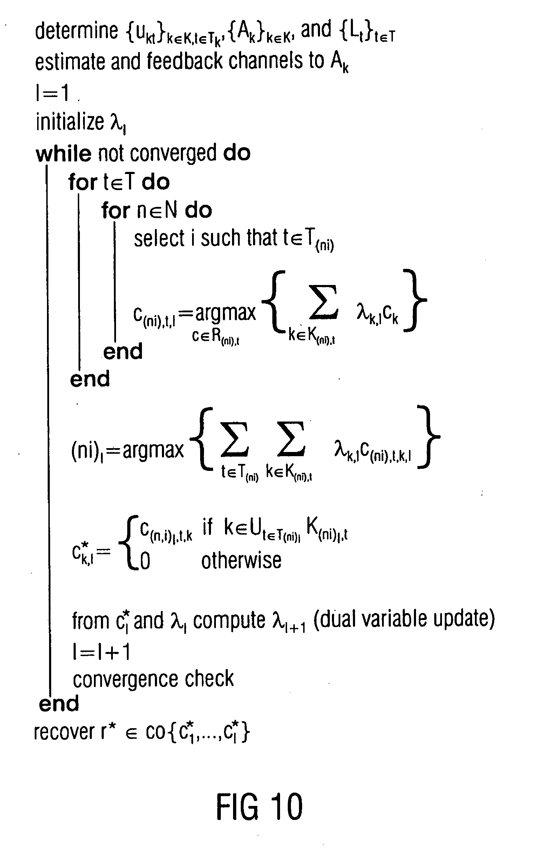

The complete algorithm of the method in accordance with the second aspect is shown in Fig. 10.

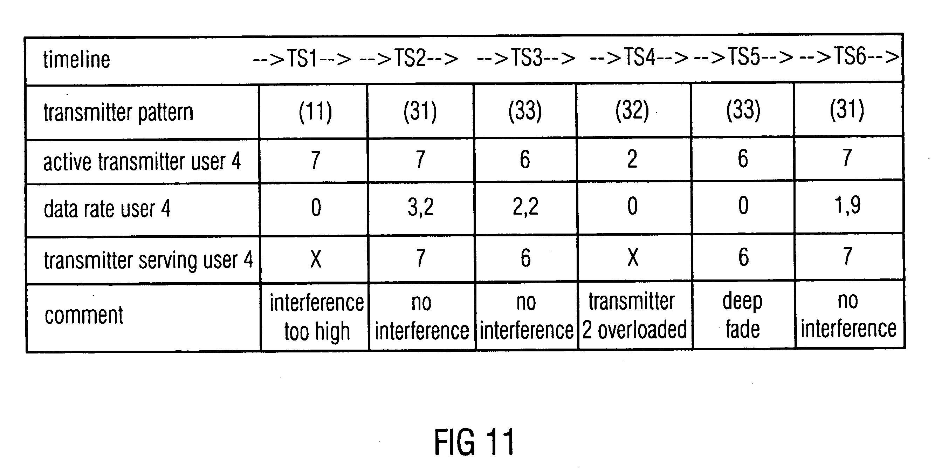

Turning again to the example shown in Figs. 7 to 9, assuming that the algorithm produces candidate points for more patterns (11), (31), (32) and (33) and that the final resource allocation allows activating all of them, for example, user 4 may be potentially served by transmitter 7 on the resources assigned to patterns (11) and (31), by transmitter 2 on the resources of (32), and by transmitter 6 on the resources of pattern (33). In case the assigned resources are time slots, this results in a fast reselection of transmitters as is shown in the table in Fig. 11. Fig. 11 shows for user 4 in the exemplary network shown in Fig. 2(a) the fast reselection of transmitters. The time line shows consecutive time slots TS1 to TS6 and the table shows the respective transmitter pattern for a time slot. By the above described allocation of resources, for example time slots, to the candidate points an implicit selection rule is implemented (dynamic cell selection) together with a fractional frequency reuse. By means of the weighted sum-rate optimization a user selection is performed, which considers, for example, interference, instantaneous channel conditions and a load of a transmitter. As shown in Fig. 11 at a first time slot TS1 user 4 is associated with transmitter pattern 1 and is served by transmitter 7. At this time slot the data rate of user 4 is 0 and there is actually no transmitter serving user 4 because the interference, the user 4 experiences, is too high. During the next time slot TS2 transmit pattern 31 is selected so that the active transmitter for user 4 is again transmitter 7, and the transmitter serving user 4 with a data rate of 3.2 is transmitter 7. No interference is experienced. During time slot TS3 the transmitter pattern 33 is applied so that for user 4 the active transmitter is transmitter 6. Thus, the transmitter serving user 4 is switched from transmitter 7 to transmitter 6, no interference is reported. During time slot TS4 the transmitter pattern 32 is selected which means that the active transmitter for user 4 is now transmitter 2. However, it is determined that the transmitter 2 is overloaded, so that the user 4 during this time slot cannot be served. During the next time slot, TS5, the pattern is again pattern 33 so that the active transmitter for user 4 may be transmitter 6, however, it is determined that there is a deep fade situation so that the data rate of user 4 is 0. During time slot TS6 the transmit pattern 31 is selected and, again, transmitter 7 is the active transmitter for user 4. No interference is reported, so that a change of the transmitter from transmitter 6 to transmitter 7 is done so that transmitter 7 is the serving transmitter and a data rate of 1.9 is realized in the communication between the transmitter 7 and the user 4.

It is noted that, basically, the user may also be served by all transmitters (in the active transmitter set) in consecutive time slots, but not by more than one in a single timeslot. Whether a user is actually served by all three transmitters depends on the entries of the candidate configurations found as the result of the weighted sum-rate optimization (see Equation (1.6)).

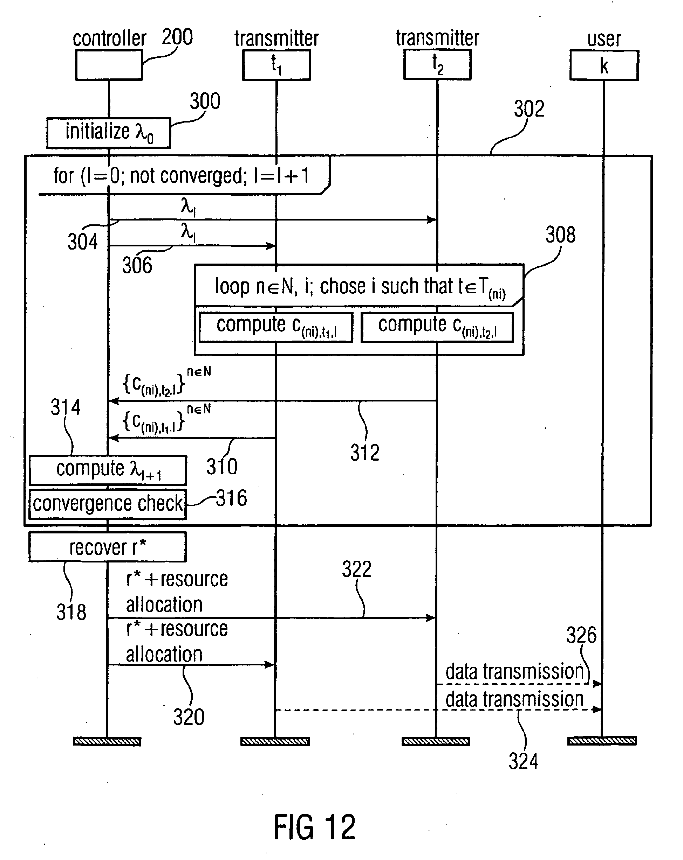

The above-described algorithm for solving the problem in equation (1.2) may use two different signaling approaches for implementing the algorithm, namely either a centralized version or a decentralized version. Fig. 12 shows a sequence diagram for the centralized dynamic cell selection in accordance with embodiments of the invention. The messages exchanged between a controller 200 of the network to transmitters $t_1$, $t_2$ and a user k are described. The controller 200, in a first block 300, initializes the weights used for weighted sum-rate optimization to an initial value $\lambda_0$.

The block 302 depicts one iteration I and in this block 302 the controller, by means of messages 304 and 306, forwards the current weight $\lambda_1$, to the first and second transmitters $t_1$, $t_2$. Each transmitter $t \in \mathcal{T}$ performs in block 308 $n$ weighted sum-rate optimizations in accordance with Equation (1.4). The resulting reconfigurations ($c_{(ni),t,l}$) are returned to the controller 200 by messages 310 and 312. The controller 200 determines the best pattern $(ni)_l$ in accordance with Equation (1.5) and updates the weights $\lambda_{l+1}$ that are sent to the transmitters, as is indicated in block 314. Additionally, in block 316 a convergence check is performed at the controller 200 and in case this check is positive, the rate assignment $r^*$ is recovered at block 318, and the resource allocation and the rate assignment is communicated to the transmitters $t_1$ and $t_2$, respectively, by means of messages 320 and 322. On the basis of the rate assignment and the resource allocation, the transmitters $t_1$ and $t_2$ perform a data transmission with the user k, as is indicated by messages 324 and 326.

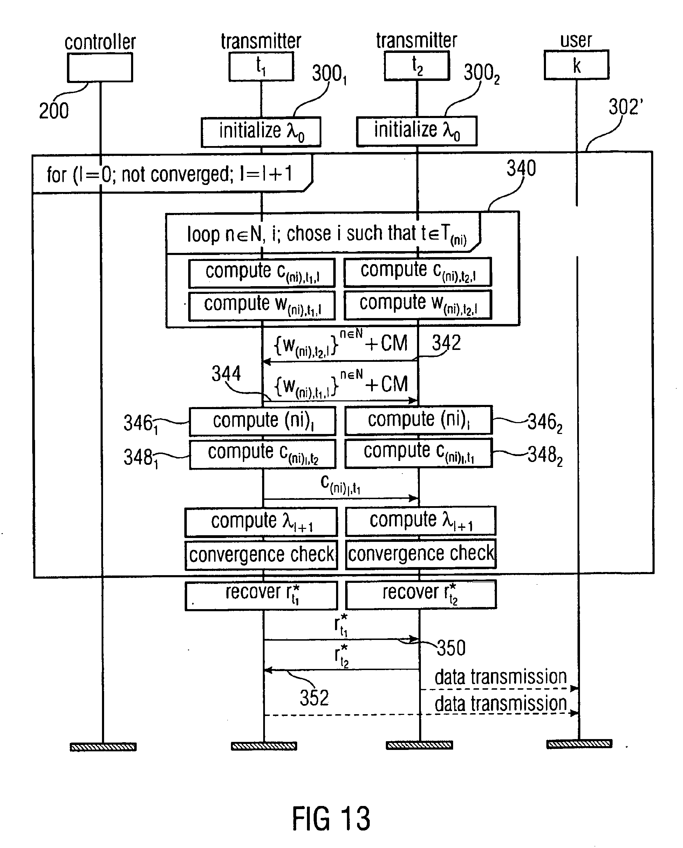

As mentioned above, also a decentralized version of the implementation of the algorithm is possible, and Fig. 13 shows a sequence diagram of the decentralized approach for the dynamic cell selection. Other than in the centralized approach, the initial weights are initiated by the respective transmitters $t_1$ and $t_2$, as shown in blocks $300_1$ and $300_2$. As in the centralized version, the weighted sum-rate optimizations in accordance with Equation (1.4) are computed locally at each transmitter $t_1$ and $t_2$, as is indicated by block 340. The weighted sum-rates $\{W_{(ni),t,l}\}_n \in N$ for each pattern with

$$w_{(ni),t,l} = \sum_{k \in \mathcal{K}_{(ni),t}} \lambda_k c_{(ni),t,l},$$

is communicated by messages 342 and 344 between the transmitters $t_1$ and $t_2$ so that every transmitter $t_1$ and $t_2$ can compute $(ni)_l$ in accordance with Equation (1.5). It is noted that it is not necessary that all transmitters communicate directly with each other, rather the communication on the rated sum-rates may also be done via the network controller or other suitable means. The calculation of $(ni)_l$ at each transmitter is depicted in Fig. 13 by blocks $346_1$ and $346_2$. As can be seen from messages 342 and 344, in addition the message CM is needed to determine the convergence. In blocks $348_1$ and $348_2$ the resulting rate configurations are calculated and the convergence check is executed. Also, if necessary, the weights for the next iteration are determined as $\lambda_{l+1}$. In accordance with a decentralized version, after the pattern winner is determined, some messages need to be interchanged among the transmitters that are in the active set of users where $c_{k,l}^* > 0$, which, in turn, allows the weights to be updated locally at the transmitters. Finally, the rate assignment information is exchanged between the transmitter via the messages 350 and 352, so that the transmitters can communicate with the user k.

In the following, on the basis of Fig. 2(a) and on the basis of Fig. 7 a further aspect of the inventive approach is described allowing for an increased flexibility for the interference management. Considering for example transmitter 7, in the example mentioned this is the active transmitter for user 3 and for user 4 in the fixed transmitter assignment, the inventive approach offers to both users, which are cell-edge users, the possibility to be moved to neighboring transmitters so that transmitter 7 can be shut down thereby reducing interference and also allowing substantial energy savings.

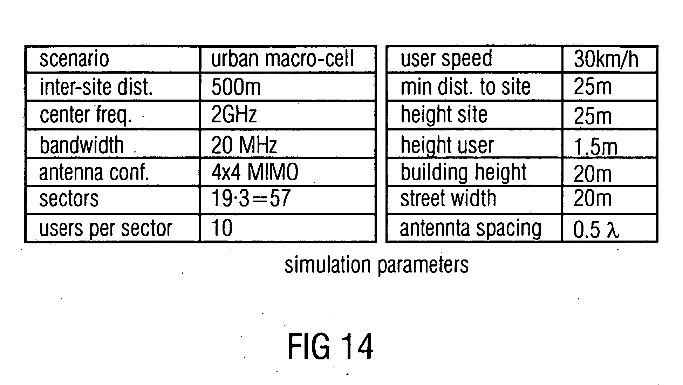

The performance of the coordination algorithm described above was evaluated by Monte-Carlo-simulations for a wrap-around configuration, following the guidelines as outlined in "Working document towards proposed draft new report [guidelines for evaluation of radio interface technologies for IMT-advanced]," International Telecommunication Union (ITU), Geneva, Switzerland, ITU-R Document 5D/TEMP/46-E, Feb. 2008. Channel matrices generated for a realistic channel model were used, as this is described in 3GPP, "Further Advancements for E-UTRA Physical Layer Aspects (Release X)," 3rd Generation Partnership Project (3GPP), TR 36.814, Jan. 2009, and the parameters are summarized in the table shown in Fig. 14. Sectorized cells with three antenna arrays per site are considered so that T=57. An average of ten users per sector, K=570, were considered to be uniformly distributed in the area (which means that the cells are not equally loaded) and an average of over 20 drops is assumed. The spectral noise density is assumed to be-174 dBm/Hz and the transmit power is gradually increased from 0 dBm to 40 dBm. The achievable rate region for each transmitter is the capacity region of the MIMO broadcast channel. Known solutions are mainly for single user systems while the focus of the inventive approach is on systems supporting multiple users. Thus, the following downlink strategies are compared:

-    uncoordinated transmission, $N = \{1\}$, cell selection: average channel quality

- uncoordinated transmission $\mathcal{N}$ = {1}, cell selection: instantaneous channel quality (FCSS)
- fractional reuse as described in A. Dotzler, W. Utschick, and G. Dietl, "Fractional reuse partitioning for MIMO networks, in Proc. IEEE Global Telecommunications Conference (GLOBECOM 2010), Dec. 2010, $\mathcal{N}$ = {1,3}, cell selection: average channel quality
- the inventive approach: fractional reuse, $\mathcal{N}$ = {1,3} with dynamic cell selection.

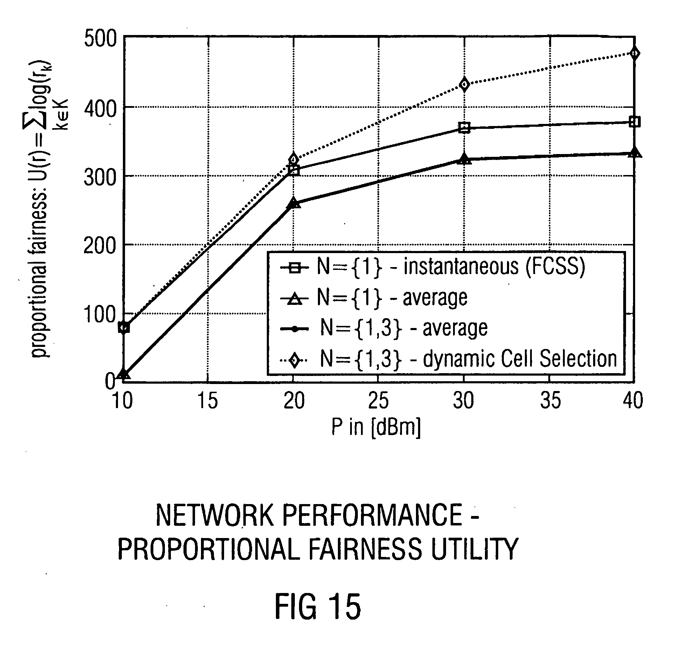

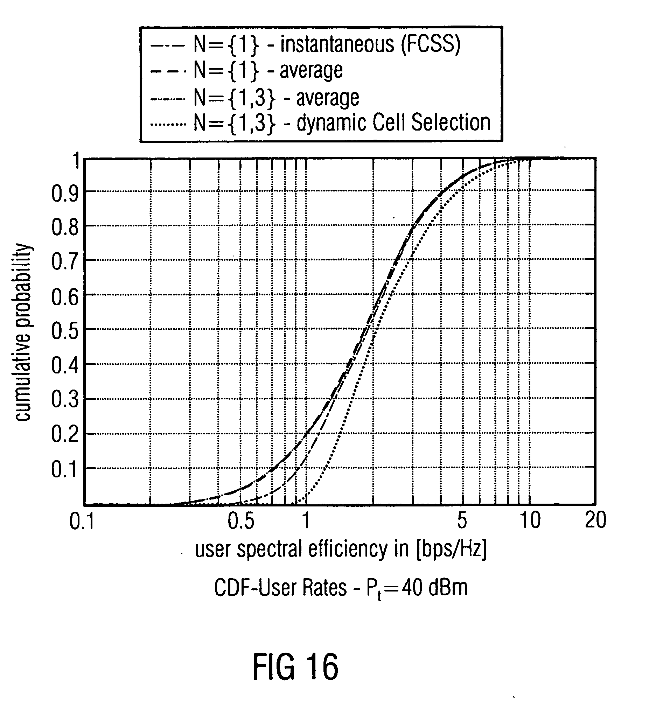

Fig. 15 shows the network performance measured by the proportional fairness utility. First, it can be seen that FCSS offers a gain compared to the selection based on the average channel quality. Second, it is noted that fractional reuse alone does not show any gain, meaning the algorithm does not assign resources to patterns 31, 32 and 33. In accordance with the inventive approach, by combining FR and DCS gains are achieved, especially for high transmit power. As the absolute values of utility are difficult to judge, a CDF of user rates for a transmit power of 40 dBm is included. Fig. 16 shows that the inventive approach is specially beneficial for the weakest user in the network, and these gains are not established at the expense of other users, rather all users benefit from the novel transmitter cooperation scheme.

Thus, embodiments of the invention provide for an approach combining dynamic cell selection and frequency reuse partitioning for multi-user networks as a selection of active transmitters per user (active transmitter set) matched to predefined reuse patterns, wherein the active transmitter sets are used to determine candidate configurations by weighted sum-rate optimization. The active transmitter set may comprise transmitters with the largest long-term average channel quality for all given reuse patterns. Further, a singling procedure between the transmitters, users and a central unit or controller may be provided allowing resource allocation and weight updates both in a centralized and decentralized manner. When compared to conventional approaches, embodiments of the invention provide for a more flexible dynamic cell selection with fractional frequency reuse also for multi-user systems. There is no exchange of channel state information required. Load balancing can be used to switch off cells, thereby reducing the power consumption of base stations or eNBs, saving energy (green communications), and reducing OPEX. Further, throughput (special efficiency) of cell-edge users is increased, leading to more satisfied customers and higher ARPU.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein. A further embodiment comprises a computer having installed thereon the computer program for performing one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the claims and not by the specific details presented by way of description and explanation of the embodiments herein.

**Claims**

1. A method for selecting base stations (104, 106, $t_1$, $t_2$) in a wireless cellular network that are used for determining candidate rate configurations for serving users (110, 112, k) of the wireless cellular network,

   wherein the base stations (104, 106, $t_1$, $t_2$) operate in accordance with a fractional reuse scheme, the fractional reuse scheme allocating frequencies such that, at the cell centers, base stations operate at the same frequency, and, at the cell edge regions, the base stations operate at frequencies different from the frequencies of adjacent cells,

   wherein the bases stations are partitioned into subsets, the fractional reuse scheme allocating distinct frequencies to respective base station subsets, each subset including base stations (104, 106, $t_1$, $t_2$) having assigned the same frequency at the cell edge regions, and

   wherein the method is **characterised in that**

   for each user (110, 112, k), determining an active base station set by selecting from each base station subset a base station (104, 106, $t_1$, $t_2$) as an active base station in accordance with a predefined criterion, an active base station being a base station from which a user, in accordance with the predefined criterion, can receive data, the predefined criterion comprising a parameter describing a communication between a user (110, 112, k) and a base station (104, 106, $t_1$, $t_2$), and

   serving a user (110, 112, k) by the active base stations in the active base station set in consecutive time slots, but not by more than one active base station in a single timeslot.

2. The method of claim 1, wherein one base station (104, 106, $t_1$, $t_2$) is selected from each base station subset as an active base station.

3. The method of claim 1 or 2, wherein the parameter comprises an average channel quality.

4. The method of claim 3, wherein a base station (104, 106, $t_1$, $t_2$) is selected as an active base station in case the parameter associated with the base station (104, 106, $t_1$, $t_2$) has a maximum/minimum value when compared to all remaining base stations in the base station subset.

5. The method of one of claims 1 to 4, wherein at least one of the active base station sets comprises at least two active base stations.

6. The method of one of claims 1 to 5, further comprising:

   for every base station (104, 106, $t_1$, $t_2$), determining a collection of all active user sets for the base station (104, 106, $t_1$, $t_2$), wherein an active user set comprises the users (110, 112, k) of a base station (104, 106, $t_1$, $t_2$) having assigned thereto a resource block.

7. The method of one of claims 1 to 6, wherein the active base station set is determined by the user (110, 112, k) and fed back to the base station (104, 106, $t_1$, $t_2$), or is determined by a network controller on the basis of parameters received from the user (110, 112, k) and describing a communication between the user (110, 112, k) and the base stations (104, 106, $t_1$, $t_2$).

8. The method of one of claims 1 to 7, further comprising:

   determining candidate rate configurations by performing at each base station (104, 106, $t_1$, $t_2$) an optimization per base station subset the base station (104, 106, $t_1$, $t_2$) is part of; and

   allocating the resource blocks to the base stations (104, 106, $t_1$, $t_2$) in accordance with the determined candidate rate configuration,

   wherein the optimization comprises a weight sum-rate optimization of the data rates achievable by the users, the optimization comprising:

for each base station (104, 106, $t_1$, $t_2$), performing the weight sum-rate optimization for every base station subset; and

finding the best network wide partition which is applied at each base station (104, 106, $t_1$, $t_2$).

9. The method of claim 8, wherein in case a plurality of users (110, 112, k) assigned to a specific cell are cell-edge users (110, 112, k) that comprise an active base station set including the base station (104, 106, $t_1$, $t_2$) of the specific cell and base stations (104, 106, $t_1$, $t_2$) of different neighboring cells, the cell-edge users (110, 112, k) are moved to the neighboring cells and the base station (104, 106, $t_1$, $t_2$) of the specific cell is shut down.

10. A computer program product comprising instructions to perform a method of one of claims 1 to 9 when executing the instructions on a computer.

11. A wireless cellular network comprising a plurality of base stations (104, 106, $t_1$, $t_2$) operating in accordance with the fractional reuse scheme, wherein the network is configured to be operated in accordance with the method of one of claims 1 to 9.

12. Base stations for a wireless cellular network, operating in accordance with the fractional reuse scheme, wherein the base stations (104, 106, $t_1$, $t_2$) are configured to perform the method of one of claims 1 to 9.

13. A network controller for a wireless cellular network, the wireless cellular network comprising a plurality of base stations (104, 106, $t_1$, $t_2$) operating in accordance with the fractional reuse scheme, wherein the network controller is configured to perform, the method of one of claims 1 to 9.

**Patentansprüche**

1. Ein Verfahren zum Auswählen von Basisstationen (104, 106, $t_1$, $t_2$) in einem drahtlosen Zellularnetz, die zum Ermitteln von in Frage kommenden Ratenkonfigurationen verwendet werden, um Nutzern (110, 112, k) des drahtlosen Zellularnetzes zu dienen,

wobei die Basisstationen (104, 106, $t_1$, $t_2$) gemäß einem Schema einer teilweisen Wiederverwendung arbeiten, wobei das Schema einer teilweisen Wiederverwendung Frequenzen derart zuweist, dass in den Zellenzentren Basisstationen bei derselben Frequenz arbeiten und in den Zellenrandregionen die Basisstationen bei Frequenzen arbeiten, die sich von den Frequenzen benachbarter Zellen unterscheiden,

wobei die Basisstationen in Untergruppen unterteilt sind, wobei das Schema einer teilweisen Wiederverwendung bestimmte Frequenzen jeweiligen Basisstationen-Untergruppen zuweist, wobei jede Untergruppe Basisstationen (104, 106, $t_1$, $t_2$) umfasst, denen an den Zellenrandregionen dieselbe Frequenz zugeteilt ist, und

wobei das Verfahren **dadurch gekennzeichnet ist, dass**

für jeden Nutzer (110, 112, k) eine aktive Basisstation bestimmt wird, indem aus jeder Basisstationen-Untergruppe gemäß einem vordefinierten Kriterium eine Basisstation (104, 106, $t_1$, $t_2$) als aktive Basisstation ausgewählt wird, wobei eine aktive Basisstation eine Basisstation ist, von der ein Nutzer gemäß dem vordefinierten Kriterium Daten empfangen kann, wobei das vordefinierte Kriterium einen Parameter aufweist, der eine Kommunikation zwischen einem Nutzer (110, 112, k) und einer Basisstation (104, 106, $t_1$, $t_2$) beschreibt, und

ein Nutzer (110, 112, k) durch die aktiven Basisstationen in der Gruppe von aktiven Basisstationen in aufeinander folgenden Zeitschlitzen bedient wird, jedoch nicht durch mehr als eine aktive Basisstation in einem einzelnen Zeitschlitz.

2. Das Verfahren gemäß Anspruch 1, bei dem aus jeder Basisstationen-Untergruppe eine Basisstation (104, 106, $t_1$, $t_2$) als aktive Basisstation ausgewählt wird.

3. Das Verfahren gemäß Anspruch 1 oder 2, bei dem der Parameter eine durchschnittliche Kanalqualität aufweist.

4. Das Verfahren gemäß Anspruch 3, bei dem eine Basisstation (104, 106, $t_1$, $t_2$) als aktive Basisstation ausgewählt wird, falls der der Basisstation (104, 106, $t_1$, $t_2$) zugeordnete Parameter im Vergleich zu allen übrigen Basisstationen in der Basisstationen-Untergruppe einen maximalen/minimalen Wert aufweist.

5. Das Verfahren gemäß einem der Ansprüche 1 bis 4, bei dem zumindest eine der Gruppe von aktiven Basisstationen zumindest zwei aktive Basisstationen aufweist.

**6.** Das Verfahren gemäß einem der Ansprüche 1 bis 5, das ferner folgenden Schritt aufweist:

für jede Basisstation (104, 106, $t_1$, $t_2$), Bestimmen einer Sammlung aller Gruppen von aktiven Nutzern für die Basisstation (104, 106, $t_1$, $t_2$), wobei eine Gruppe von aktiven Nutzern diejenigen Nutzer (110, 112, k) einer Basisstation (104, 106, $t_1$, $t_2$) aufweist, denen ein Ressourcenblock zugeteilt ist.

**7.** Das Verfahren gemäß einem der Ansprüche 1 bis 6, bei dem die Gruppe von aktiven Basisstationen durch den Nutzer (110, 112, k) bestimmt und an die Basisstation (104, 106, $t_1$, $t_2$) zurückgemeldet wird oder durch eine Netzsteuerung auf der Basis von Parametern bestimmt wird, die von dem Nutzer (110, 112, k) empfangen werden und eine Kommunikation zwischen dem Nutzer (110, 112, k) und den Basisstationen (104, 106, $t_1$, $t_2$) beschreiben.

**8.** Das Verfahren gemäß einem der Ansprüche 1 bis 7, das ferner folgende Schritte aufweist:

Ermitteln von in Frage kommenden Ratenkonfigurationen durch Durchführen, an jeder Basisstation (104, 106, $t_1$, $t_2$), einer Optimierung pro Basisstationen-Untergruppe, zu der die Basisstation (104, 106, $t_1$, $t_2$) gehört; und Zuweisen der Ressourcenblöcke zu den Basisstationen (104, 106, $t_1$, $t_2$) gemäß der ermittelten in Frage kommenden Ratenkonfiguration, wobei die Optimierung eine Gewichtssummenratenoptimierung der seitens der Nutzer erzielbaren Datenraten aufweist, wobei die Optimierung Folgendes aufweist:

für jede Basisstation (104, 106, $t_1$, $t_2$), Durchführen der Gewichtssummenratenoptimierung für jede Basisstationen-Untergruppe; und Finden der besten netzweiten Unterteilung, die an jeder Basisstation (104, 106, $t_1$, $t_2$) angelegt wird.

**9.** Das Verfahren gemäß Anspruch 8, bei dem in dem Fall, dass eine Mehrzahl von Nutzern (110, 112, k), die einer spezifischen Zelle zugeteilt sind, Zellenrandnutzer (110, 112, k) sind, die eine Gruppe an aktiven Basisstationen aufweisen, die die Basisstation (104, 106, $t_1$, $t_2$) der spezifischen Zelle und Basisstationen (104, 106, $t_1$, $t_2$) verschiedener benachbarter Zellen umfasst, die Zellenrandnutzer (110, 112, k) in die benachbarten Zellen verlagert werden und die Basisstation (104, 106, $t_1$, $t_2$) der spezifischen Zelle außer Betrieb gesetzt wird.

**10.** Ein Computerprogrammprodukt, das Anweisungen aufweist, ein Verfahren gemäß einem der Ansprüche 1 bis 9 durchzuführen, wenn es die Anweisungen auf einem Computer ausführt.

**11.** Ein drahtloses Zellularnetz, das eine Mehrzahl von Basisstationen (104, 106, $t_1$, $t_2$) aufweist, die gemäß dem Schema einer teilweisen Wiederverwendung arbeiten, wobei das Netz dazu konfiguriert ist, gemäß dem Verfahren eines der Ansprüche 1 bis 9 betrieben zu werden.

**12.** Basisstationen für ein drahtloses Zellularnetz, die gemäß dem Schema einer teilweisen Wiederverwendung arbeiten, wobei die Basisstationen (104, 106, $t_1$, $t_2$) dazu konfiguriert sind, das Verfahren gemäß einem der Ansprüche 1 bis 9 durchzuführen.

**13.** Eine Netzsteuerung für ein drahtloses Zellularnetz, wobei das drahtlose Zellularnetz eine Mehrzahl von Basisstationen (104, 106, $t_1$, $t_2$) aufweist, die gemäß dem Schema einer teilweisen Wiederverwendung arbeiten, wobei die Netzsteuerung dazu konfiguriert ist, das Verfahren gemäß einem der Ansprüche 1 bis 9 durchzuführen.

**Revendications**

**1.** Procédé de sélection de stations de base (104, 106, $t_1$, $t_2$) dans un réseau cellulaire sans fil qui sont utilisées pour déterminer des configurations de taux candidats pour desservir les utilisateurs (110, 112, k) du réseau cellulaire sans fil,

dans lequel les stations de base (104, 106, $t_1$, $t_2$) fonctionnent selon un schéma de réutilisation fractionnelle, le schéma de réutilisation fractionnelle attribuant des fréquences de sorte que, aux centres de cellule, les stations de base fonctionnent à la même fréquence, et, dans les régions de bord de cellule, les stations de base fonctionnent à des fréquences différentes des fréquences de cellules adjacentes,

dans lequel les stations de base sont divisées en sous-ensembles, le schéma de réutilisation fractionnelle attribuant des fréquences distinctes à des sous-ensembles de stations de base respectifs, chaque sous-ensemble comportant des stations de base (104, 106, $t_1$, $t_2$) présentant, y attribuée, la même fréquence dans les régions de bord de cellule, et

dans lequel le procédé est **caractérisé par** le fait de

déterminer, pour chaque utilisateur (110, 112, k), un ensemble de stations de base actives en sélectionnant de chaque sous-ensemble de stations de base une station de base (104, 106, $t_1$, $t_2$) comme station de base active selon un critère prédéfini, une station de base active étant une station de base de laquelle un utilisateur peut, selon le critère prédéfini, recevoir des données, le critère prédéfini comprenant un paramètre décrivant une communication entre un utilisateur (110, 112, k) et une station de base (104, 106, $t_1$, $t_2$), et

desservir un utilisateur (110, 112, k) par les stations de base actives dans l'ensemble de stations de base actives dans des intervalles de temps successifs, mais pas par plus d'une station de base active dans un seul intervalle de temps.

2. Procédé selon la revendication 1, dans lequel une station de base (104, 106, $t_1$, $t_2$) est sélectionnée parmi chaque sous-ensemble de stations de base comme station de base active.

3. Procédé selon la revendication 1 ou 2, dans lequel le paramètre comprend une qualité de canal moyenne.

4. Procédé selon la revendication 3, dans lequel une station de base (104, 106, $t_1$, $t_2$) est sélectionnée comme station de base active au cas où le paramètre associé à la station de base (104, 106, $t_1$, $t_2$) présente une valeur maximale/minimale, comparé à toutes les stations de base restantes dans le sous-ensemble de stations de base.

5. Procédé selon l'une des revendications 1 à 4, dans lequel au moins l'un des ensembles de stations de base actives comprend au moins deux stations de base actives.

6. Procédé selon l'une des revendications 1 à 5, comprenant par ailleurs le fait de:

déterminer, pour chaque station de base (104, 106, $t_1$, $t_2$), une collection de tous les ensembles d'utilisateurs actifs pour la station de base (104, 106, $t_1$, $t_2$), où un ensemble d'utilisateurs actifs comprend les utilisateurs (110, 112, k) d'une station de base (104, 106, $t_1$, $t_2$) présentant, y attribué, un bloc de ressources.

7. Procédé selon l'une des revendications 1 à 6, dans lequel l'ensemble de stations de base actives est déterminé par l'utilisateur (110, 112, k) et renvoyé vers la station de base (104, 106, $t_1$, $t_2$), ou est déterminé par un contrôleur de réseau sur base de paramètres reçus de l'utilisateur (110, 112, k) et décrivant une communication entre l'utilisateur (110, 112, k) et les stations de base (104, 106, $t_2$).

8. Procédé selon l'une des revendications 1 à 7, comprenant par ailleurs le fait de:

déterminer les configurations de taux candidates en effectuant à chaque station de base (104, 106, $t_1$, $t_2$) une optimisation par sous-ensemble de stations de base dont la station de base (104, 106, $t_1$, $t_2$) fait partie; et attribuer les blocs de ressources aux stations de base (104, 106, $t_1$, $t_2$) selon la configuration de taux candidate déterminée,

dans lequel l'optimisation comprend une optimisation de taux de somme de poids des débits de données pouvant être obtenus par les utilisateurs, l'optimisation comprenant le fait de:

effectuer, pour chaque station de base (104, 106, $t_1$, $t_2$), l'optimisation de taux de somme de poids pour chaque sous-ensemble de stations de base; et trouver la meilleure division à l'échelle du réseau qui est appliquée à chaque station de base (104, 106, $t_1$, $t_2$).

9. Procédé selon la revendication 8, dans lequel, au cas où une pluralité d'utilisateurs (110, 112, k) attribués à une cellule spécifique sont des utilisateurs de bord de cellule (110, 112, k) qui comprennent un ensemble de stations de base actives comportant la station de base (104, 106, $t_1$, $t_2$) de la cellule spécifique et des stations de base (104, 106, $t_1$, $t_2$) de différentes cellules voisines, les utilisateurs de bord de cellule (110, 112, k) sont déplacés vers les cellules voisines et la station de base (104, 106, $t_1$, $t_2$) de la cellule spécifique est mise hors service.

10. Produit de programme d'ordinateur comprenant des instructions pour réaliser un procédé selon l'une des revendications 1 à 9 lorsque les instructions sont exécutées sur un ordinateur.

11. Réseau cellulaire sans fil comprenant une pluralité de stations de base (104, 106, $t_1$, $t_2$) fonctionnant selon le schéma de réutilisation fractionnelle, dans lequel le réseau est configuré pour fonctionner selon le procédé de l'une des revendications 1 à 9.

**12.** Stations de base pour un réseau cellulaire sans fil fonctionnant selon le schéma de réutilisation fractionnelle, dans lesquelles les stations de base (104, 106, $t_1$, $t_2$) sont configurées pour réaliser le procédé selon l'une des revendications 1 à 9.

**13.** Contrôleur de réseau pour un réseau cellulaire sans fil, le réseau cellulaire sans fil comprenant une pluralité de stations de base (104, 106, $t_1$, $t_2$) fonctionnant selon le schéma de réutilisation fractionnelle, dans lequel le contrôleur de réseau est configuré pour réaliser le procédé selon l'une des revendications 1 à 9.

FIG 1

FIG 2A

Reuse 1-$T_{(11)}$ = {1,2,3,4,5,6,7,8,9}

Reuse 3-$T_{(31)}$ = {1,4,7}

Reuse 3-$T_{(32)}$ = {2,5,8}

Reuse 3-$T_{(33)}$ = {3,6,9}

FIG 2B

FIG 2C

$$\mathsf{I} = 1$$

initialize $\lambda_{\mathsf{I}}$

**while** not converged **do**

    **for** $n \in N$ **do**

        **for** $i = 1,...,n$ **do**

$$c_{(ni),I} = \underset{c \in R_{(ni)}}{\mathrm{argmax}} \{\lambda_I^T c\}$$

        **end**

    **end**

$$(ni)_I = \underset{n \in N, \, 0 < i < n}{\mathrm{argmax}} \{\lambda_I^T c_{(ni),I}\}$$

$$c_I^* = c_{(ni)_I}$$

    from $c_I^*$ and $\lambda_I$ compute $\lambda_{I+1}$ (dual variable update)$^2$

$$\mathsf{I} = \mathsf{I} + 1$$

    convergence check

**end**

recover $r^* \in \mathrm{co}\{c_1^*,...,c_I^*\}$

# FIG 3

FIG 4

EP 2 525 523 B1

FIG 5

EP 2 525 523 B1

FIG 6

FIG 7

| | $a_{(ni),1}$ | $a_{(ni),2}$ | $a_{(ni),3}$ | $a_{(ni),4}$ | $a_{(ni),5}$ | $a_{(ni),6}$ |
|---|---|---|---|---|---|---|
| $T_{(11)} = \{1,...,9\}$ | 2 | 2 | 7 | 7 | 6 | 6 |
| $T_{(31)} = \{1,4,7\}$ | – | 7 | 7 | 7 | 7 | – |
| $T_{(32)} = \{2,5,8\}$ | 2 | 2 | 2 | 2 | 2 | – |
| $T_{(33)} = \{3,6,9\}$ | – | 6 | – | 6 | 6 | 6 |

active user sets

# FIG 8

| | $K_{(ni),2}$ | $K_{(ni),6}$ | $K_{(ni),7}$ |
|---|---|---|---|
| (11) | 1,2 | 3,4 | 5,6 |
| (31) | – | – | 2,3,4,5 |
| (32) | 1,2,3,4,5 | – | – |
| (33) | – | 2,4,5,6 | – |

available users to the transmitters

# FIG 9

determine $\{u_{kt}\}_{k\in K, t\in T_k}, \{A_k\}_{k\in K},$ and $\{L_t\}_{t\in T}$
estimate and feedback channels to $A_k$
$l=1$
initialize $\lambda_l$
**while** not converged **do**
　　**for** $t\in T$ **do**
　　　　**for** $n\in N$ **do**
　　　　　　select $i$ such that $t\in T_{(ni)}$

$$C_{(ni),t,l}=\underset{c\in R_{(ni),t}}{\mathrm{argmax}}\left\{\sum_{k\in K_{(ni),t}}\lambda_{k,l}c_k\right\}$$

　　　　**end**
　　**end**

$$(ni)_l=\mathrm{argmax}\left\{\sum_{t\in T_{(ni)}}\sum_{k\in K_{(ni),t}}\lambda_{k,l}c_{(ni),t,k,l}\right\}$$

$$c_{k,l}^*=\begin{cases}c_{(n,i)_l,t,k} & \text{if } k\in U_{t\in T_{(ni)l}}K_{(ni)l,t}\\0 & \text{otherwise}\end{cases}$$

　　from $c_l^*$ and $\lambda_l$ compute $\lambda_{l+1}$ (dual variable update)
　　$l=l+1$
　　convergence check
**end**
recover $r^*\in co\{c_1^*,...,c_l^*\}$

# FIG 10

| timeline | -->TS1--> | -->TS2--> | -->TS3--> | -->TS4--> | -->TS5--> | -->TS6--> |
|---|---|---|---|---|---|---|
| transmitter pattern | (11) | (31) | (33) | (32) | (33) | (31) |
| active transmitter user 4 | 7 | 7 | 6 | 2 | 6 | 7 |
| data rate user 4 | 0 | 3,2 | 2,2 | 0 | 0 | 1,9 |
| transmitter serving user 4 | X | 7 | 6 | X | 6 | 7 |
| comment | interference too high | no interference | no interference | transmitter 2 overloaded | deep fade | no interference |

FIG 11

EP 2 525 523 B1

FIG 12

controller

transmitter
$t_1$

transmitter
$t_2$

user
k

$300_1$

$300_2$

200

initialize $\lambda_0$

initialize $\lambda_0$

302'

for (l=0; not converged; l=l+1)

340

loop n∈N, i; chose i such that t∈$T_{(ni)}$

compute $c_{(ni),t_1,l}$

compute $c_{(ni),t_2,l}$

compute $w_{(ni),t_1,l}$

compute $w_{(ni),t_2,l}$

$\{w_{(ni),t_2,l}\}^{n∈N}$+CM

342

344

$\{w_{(ni),t_1,l}\}^{n∈N}$+CM

$346_1$ compute $(ni)_l$

compute $(ni)_l$ $346_2$

$348_1$ compute $c_{(ni)_l,t_2}$

compute $c_{(ni)_l,t_1}$ $348_2$

$c_{(ni)_l,t_1}$

compute $\lambda_{l+1}$

compute $\lambda_{l+1}$

convergence check

convergence check

recover $r^*_{t_1}$

recover $r^*_{t_2}$

$r^*_{t_1}$

350

$r^*_{t_2}$

data transmission

352

data transmission

## FIG 13

| scenario | urban macro-cell | | user speed | 30km/h |
|---|---|---|---|---|
| inter-site dist. | 500m | | min dist. to site | 25m |
| center freq. | 2GHz | | height site | 25m |
| bandwidth | 20 MHz | | height user | 1.5m |
| antenna conf. | 4x4 MIMO | | building height | 20m |
| sectors | 19·3=57 | | street width | 20m |
| users per sector | 10 | | antennta spacing | 0.5 λ |

simulation parameters

# FIG 14

NETWORK PERFORMANCE -
PROPORTIONAL FAIRNESS UTILITY

FIG 15

CDF-User Rates - $P_t = 40$ dBm

FIG 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. P. KELLY ; A. K. MAULLOO ; D. K. H. TAN.** Rate control for communication networks: shadow prices, proportional fairness and stability. *Journal of the Operational Research Society,* 1998, vol. 49 (3), 237-252
- **S. W. HALPERN.** Reuse partitioning in cellular systems. *33rd IEEE Vehicular Technology Conference,* May 1983, vol. 33, 322-327
- **M. RAHMAN ; H. YANIKOMEROGLU.** Enhancing cell-edge performance: a downlink dynamic interference avoidance scheme with inter-cell coordination. *IEEE Transactions on Wireless Communications,* 2010, vol. 9 (4), 1414-1425
- **A. DOTZLER ; W. UTSCHICK ; G. DIETL.** Fractional reuse partitioning for MIMO networks. *Proc. IEEE Global Telecommunications Conference (GLOBECOM 2010),* December 2010
- **S. DAS ; H. VISWANATHAN ; G. RITTENHOUSE.** Dynamic load balancing through coordinated scheduling in packet data systems. *Proc. 22nd Annual Joint Conference of the IEEE Computer and Communications Societies (INFOCOM 2003),* April 2003, vol. 1, 786-796
- **A. SANG ; X. WANG ; M. MADIHIAN ; R. GITLIN.** Coordinated load balancing, handoff/cellsite selection, and scheduling in multi-cell packet data systems. *Wireless Networks,* 2008, vol. 14, 103-120
- Enhanced dynamic cell selection with muting scheme for DL CoMP in LTE-A. **M. FENG ; X. SHE ; L. CHEN ; Y. KISHIYAMA.** Proc. IEEE 71st Vehicular Technology Conference. VTC 2010-Spring, 2010, 1-5
- **S. SESIA ; I. TOUFIK ; M. BAKER.** LTE, The UMTS Long Term Evolution: From Theory to Practice. Wiley, April 2009
- Dynamic Channel Assignment with Flexible Reuse Partitioning in Cellular Systems. **CHEN S L et al.** 2004 IEEE INTERNATIONAL CONFERENCE ON COMMUNICATIONS. IEEE OPERATIONS CENTER, 20 June 2004, vol. 7, 4275-4279
- **CHANG R Y et al.** A Graph Approach to Dynamic Fractional Frequency Reuse (FFR) in Multi-Cell OFDMA Networks. *COMMUNICATIONS, 2009. ICC '09. IEEE INTERNATIONAL CONFERENCE,* 14 June 2009, ISBN 978-1-4244-3435-0, 1-6
- Working document towards proposed draft new report [guidelines for evaluation of radio interface technologies for IMT-advanced. *International Telecommunication Union (ITU), Geneva, Switzerland, ITU-R Document 5D/TEMP/46-E,* February 2008
- Further Advancements for E-UTRA Physical Layer Aspects (Release X). *3rd Generation Partnership Project (3GPP), TR 36.814,* January 2009